# FASCICULE DE BREVET EUROPEEN

(11) **EP 2 409 044 B1**
(45) Date de publication et mention de la délivrance du brevet: **08.07.2015**
(21) Numéro de dépôt: 10714914.8
(22) Date de dépôt: 01.03.2010
(51) Int. Cl.: F16C 19/16, F16C 25/08, F16C 33/60

(54) **BUTEE AXIALE DEBRAYABLE**
AUSRÜCKBARER AXIALANSCHLAG
DISENGAGEABLE AXIAL ABUTMENT

(30) Priorité: 16.03.2009 FR 0951634
(43) Date de publication de la demande: 25.01.2012
(73) Titulaire: Snecma, 75015 Paris (FR)
(72) Inventeur: MARCIQUET, Charles, F-27930 Irreville (FR); COLLONGEAT, Laurent, F-27200 Vernon (FR); BOURDIN, Philippe, F-27950 Saint Just (FR); FONTEYN, Patrice, F-27200 Vernon (FR)
(74) Mandataire: Thévenet, Jean-Bruno
(86) Numéro de dépôt international: PCT/FR2010/050344
(87) Numéro de publication internationale: WO 2010/106264

(56) Documents cités:
- JP-A- 2003 172 341
- US-A- 4 538 960
- US-A1- 2002 181 818

## Description

### Domaine de l'invention

La présente invention a pour objet une butée axiale débrayable pour machine tournante équipée de paliers fluides, comprenant une bague intérieure disposée autour d'un arbre tournant de façon non frettée radialement sur ledit arbre, un cône de synchronisation monté sur l'arbre tournant pour assurer l'entraînement en rotation sélective de la bague intérieure, une bague extérieure montée sur un carter à l'aide d'un système de suspension souple, et des éléments de roulement à contact oblique.

### Art antérieur

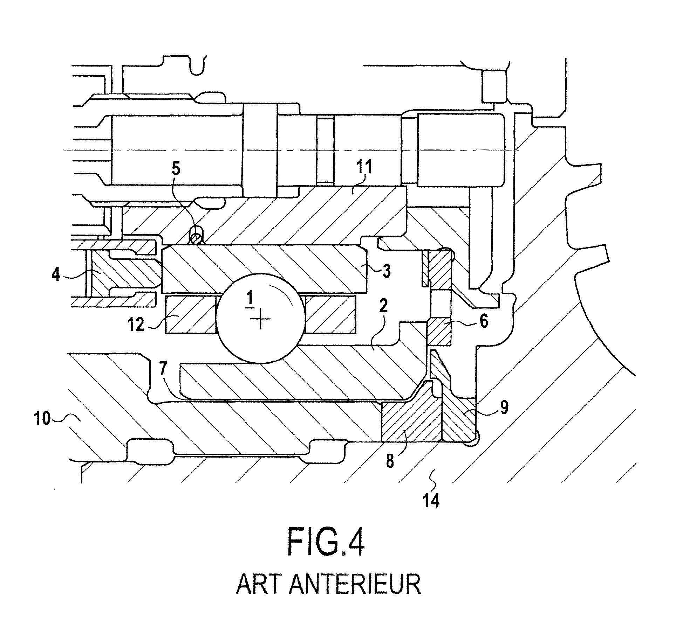

Dans le cadre de machines tournantes montées sur des paliers radiaux fluides, on connaît déjà des butées axiales débrayables, telles que celles représentées sur la figure 4, qui sont destinées à reprendre les efforts résiduels axiaux.

En particulier, on a développé des machines tournantes cryotechniques sur des paliers fluides dont un des intérêts majeurs est la longue durée de vie, comparativement aux machines sur paliers classiques à billes ou rouleaux qui, du fait de l'impossibilité en ambiance cryogénique d'apporter la lubrification nécessaire, sont confrontées à des problèmes d'usure.

L'architecture sur paliers fluides nécessite un élément de reprise des efforts résiduels axiaux, notamment en phase transitoire pour les machines dotées d'un système d'équilibrage axial actif en régime stabilisé.

La figure 4 montre un exemple de butée axiale à billes débrayable connue qui est utilisée sur des machines tournantes équipées de paliers radiaux fluides.

Sur la figure 4, on voit l'un des éléments de roulement 1 constitué par des billes emprisonnées dans une cage 12 et interposées entre une bague intérieure 2 et une bague extérieure 3.

La bague intérieure 2 est montée avec un jeu 7 sur un arbre principal 10, 14 et peut être entraînée en rotation avec l'arbre 10, 14 grâce à un cône de synchronisation 8. L'arrêt en rotation de la bague intérieure 2 se produit par contact de celle-ci avec un élément 6 de butée statorique. La bague extérieure 3 est montée par rapport au carter 11 de façon à pouvoir coulisser par rapport à celui-ci. La bague extérieure 3 peut coopérer avec un fil centreur souple 5 servant d'amortisseur qui est interposé entre la bague extérieur 3 et le carter 11, et avec un système 4 de précharge du roulement, qui peut comprendre un ressort agissant axialement sur la bague externe 3.

Le roulement préchargé à contact oblique de la figure 4 définit une butée axiale débrayable à deux points de contact entre chaque bille et les bagues intérieure 2 et extérieure 3.

La butée axiale débrayable de la figure 4 présente des inconvénients du fait de la nécessité du coulissement de la bague extérieure 3 et du choc brutal de la butée intérieure 2 contre la butée statorique 6 lors du débrayage, ce qui provoque un échauffement du roulement et de la butée statorique 6, un glissement des billes 1 et une usure des billes 1, des bagues 2, 3 et de la butée statorique 6.

On connaît par le document US 2002/0181818 A1 un palier de secours pour une machine tournante équipée de paliers magnétiques, un tel palier débrayable comprenant des billes enserrées entre une bague intérieure et deux demi-bagues extérieures qui sont elles-mêmes enserrées dans le sens axial entre un organe de butée rigide (actionneur) et un système de précharge. Le système d'embrayage est actif en ce sens qu'il implique la présence d'actionneurs qui poussent le roulement de secours sur l'arbre en rotation via un cône.

Le document JP 2003-172341-A décrit par ailleurs un palier axial à billes précontraint pouvant comprendre deux demi-bagues extérieures ou deux demi-bagues intérieures qui sont soumises à une précharge rigide.

### Définition et objet de l'invention

La présente invention vise à remédier aux inconvénients précités et notamment à éviter le débrayage brutal d'une butée axiale et les frottements intérieurs associés.

L'invention vise encore à éviter le besoin de coulissement d'une bague extérieure avec les risques associés de fretting, de mauvais coulissement et de blocage.

D'une manière générale, l'invention vise à augmenter la durée de vie d'une butée axiale débrayable installée dans une machine tournante équipée de paliers fluides.

Ces buts sont atteints, conformément à l'invention, grâce à une butée axiale débrayable pour machine tournante équipée de paliers fluides, comprenant une bague intérieure disposée autour d'un arbre tournant de façon non frettée radialement sur ledit arbre, un cône de synchronisation monté sur l'arbre tournant pour assurer l'entraînement en rotation sélective de la bague intérieure, une bague extérieure montée sur un carter à l'aide d'un système de suspension souple et des éléments de roulement à contact oblique, caractérisée en ce que la bague extérieure comprend des première et deuxième demi-bagues extérieures centrées sur le carter par ledit système de suspension souple, et en ce que les première et deuxième demi-bagues extérieures sont enserrées dans le sens axial entre d'une part un organe de butée fixe et d'autre part un système de précharge souple exerçant un effort axial prédéterminé tel que tant que la charge axiale exercée sur la butée axiale via le cône de synchronisation est supérieure à un seuil donné; les éléments de roulement présentent chacun une seule ligne de deux points de contact avec d'une part la bague intérieure et d'autre part la première demi-bague extérieure et la bague intérieure est entraînée en rotation par ledit cône de synchronisation tandis que lorsque la charge axiale exercée sur la butée axiale devient plus faible, un interstice est créé entre les première et deuxième demi-bagues extérieures et une deuxième ligne de deux points de contact supplémentaires est créée entre chacun des éléments de roulement d'une part et la bague intérieure et la deuxième demi-bague extérieure d'autre part, de sorte que la butée axiale est débrayée, l'arrêt en rotation de la bague intérieure s'effectuant par inertie et frottements internes à la butée par les quatre points de contact de chaque élément de roulement avec la bague intérieure et les première et deuxième demi-bagues extérieures.

De préférence, le jeu entre les première et deuxième demi-bagues extérieures et le carter est supérieur à 100 micromètres.

La butée axiale débrayable selon l'invention est avantageusement appliquée à une machine tournante cryotechnique et plus particulièrement à une telle machine équipée d'un système d'équilibrage axial actif en régime stabilisé.

La butée axiale selon l'invention qui, selon les phases de fonctionnement, présente deux ou quatre points de contact par élément de roulement, grâce aux deux demi-bagues extérieures dont l'espacement est variable, permet de limiter le temps de fonctionnement de la butée axiale avec une bague intérieure en prise avec l'arbre tournant aux seules phases transitoires où le système d'équilibrage axial actif en régime stabilisé n'est pas encore actif, ce qui correspond à quelques secondes à chaque cycle. Par ailleurs, le concept à quatre points de contact optimise la durée de vie en minimisant le risque d'usure des différents éléments internes et externes, dès lors notamment qu'il n'est plus nécessaire de faire appel à une butée axiale statorique pour freiner la bague intérieure.

### Brève description des dessins

D'autres caractéristiques et avantages de l'invention ressortiront de la description suivante de modes particuliers de réalisation donnés à titre d'exemples en référence aux dessins annexés ; sur lesquels :
- la figure 1 est une vue en demi-coupe axiale d'un exemple de butée axiale débrayable selon l'invention,
- la figure 2 est une vue partielle de la figure 1 dans une phase transitoire avec deux points de contact entre un élément de roulement et des bagues interne et externe,
- la figure 3 est une vue partielle de la figure 1 dans une phase de régime stabilisé avec quatre points de contact entre un élément de roulement et des bagues interne et externe, et
- la figure 4 est une vue en demi-coupe axiale d'un exemple de butée axiale débrayable selon l'art antérieur.

### Description détaillée de modes de réalisation préférentiels

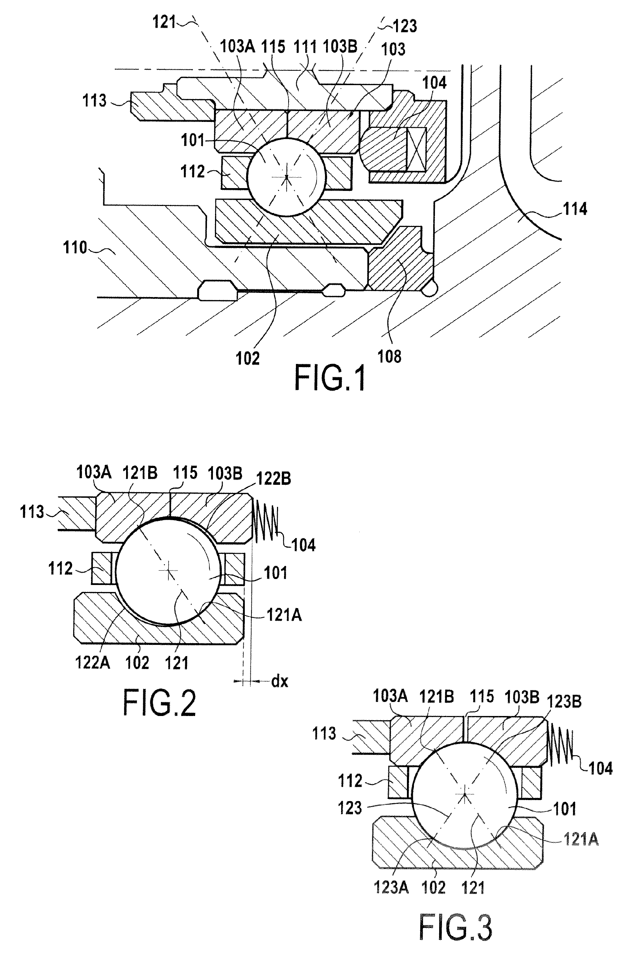

On voit sur la figure 1 un exemple de butée axiale débrayable selon l'invention qui, suivant les conditions de fonctionnement, peut présenter entre 2 et 4 points de contact entre un élément de roulement et les bagues interne et externe.

La butée axiale de la figure 1 comprend une bague intérieure 102 montée de façon non frettée radialement sur un arbre central 110, 114 qui peut par exemple être solidaire d'un rouet de machine tournante cryotechnique. L'arbre central 110, 114 est avantageusement monté sur des paliers fluides classiques, non représentés sur le dessin et la machine tournante est avantageusement équipée d'un système d'équilibrage axial actif en régime stabilisé.

Des exemples de système d'équilibrage axial actif ont été décrits par exemple dans les documents de brevet FR 2 698 666, FR 2 698 667, FR 2 915 535.

L'entraînement en rotation de la bague intérieure 102 est assuré par un cône de synchronisation 108.

La butée axiale de la figure 1 comprend des éléments de roulement 101, tels que des billes, maintenus dans une cage 112 et disposés entre la bague intérieure 102 et une bague extérieure 103 réalisée en deux parties 103A, 103B.

Les éléments 103A, 103B de la bague extérieure 103 sont centrés sur un carter 111 par un système de suspension souple tel que le jeu entre la bague externe 103 et le carter 111 soit de préférence supérieur à 100 micromètres.

Les demi-bagues extérieures 103A, 103B sont enserrées dans le sens axial entre d'une part un organe de butée fixe 113 solidaire du carter 111 et d'autre part un système de précharge 104, tel qu'un ressort, exerçant un effort axial prédéterminé, par exemple de l'ordre de quelques centaines de newton, tel que, tant que la charge axiale exercée sur la butée axiale est supérieure à un seuil donné (par exemple de l'ordre de quelques milliers de newton), qui dépend de la vitesse de rotation, les éléments de roulement 101 présentent chacun une seule ligne 121 de deux points de contact 121A, 121B, avec d'une part la bague intérieure 102 et d'autre part la première demi-bague extérieure 103A. Dans ce cas, la bague intérieure 102 est entraînée en rotation par le cône de synchronisation 108 et les deux demi-bagues extérieures 103A, 103B sont maintenues en contact l'une contre l'autre par la précharge 104 et l'interstice 115 est nul, comme représenté sur la figure 2 où l'on voit un léger déplacement axial dx de la bague intérieure 102 par rapport à l'ensemble des deux demi-bagues extérieures 103A, 103B qui sont en contact l'une avec l'autre. Dans ce cas, une bille 101 est en contact au point 121A avec la bague intérieure 102 et au point 121B avec la demi-bague extérieure 103A, selon une ligne de contacts oblique 121. Au contraire, selon une deuxième ligne oblique entre la demi-bague extérieure 103B et la bague intérieure 102, les contacts sont libérés dans une zone 122A entre une bille 101 et la bague intérieure 102 et dans une zone 122B entre la bille 101 et la demi-bague extérieure 103B.

Lorsque la charge axiale exercée sur la butée axiale devient inférieure à un seuil donné, la diminution de la déflexion axiale génère un interstice 115 de valeur non nulle entre les demi-bagues extérieures 103A, 103B et une deuxième ligne 123 de deux points de contact supplémentaires 123A, 123B est créée entre chacune des billes 101 d'une part et la bague intérieure 102 et la demi-bague extérieure 103B d'autre part (voir figure 3). Dans ce cas, la butée axiale est débrayée, l'arrêt en rotation de la bague intérieure 102 s'effectuant par inertie et frottements internes à la butée par les quatre points de contact de chaque bille 101 avec la bague intérieure 102 et les demi-bagues extérieures 103A, 103B.

La butée axiale débrayable selon l'invention, qui présente deux ou quatre points de contact selon les conditions de fonctionnement, comprend une bague extérieure 103 formée de deux demi-bagues 103A, 103B qui restent dans le logement défini entre la pièce d'appui 113 et la précharge 104, sans nécessiter un coulissement, seule la demi-bague 103B présentant un très léger déplacement dans le sens axial contre l'action de la précharge souple 104 lorsqu'un jeu ou interstice 115 est créé (figure 3) dès lors que l'effort axial résiduel exercé sur la butée axiale en fin de régime transitoire a chuté au-dessous d'un seuil prédéterminé.

Ainsi, dans une phase de démarrage et tant que la charge axiale liée à la phase transitoire est supérieure à l'effort, seuil qui dépend de la vitesse de rotation (par effet centrifuge sur les billes 101) il existe une seule ligne oblique de contacts 121 entre les billes 101 et les bagues 102, 103 (figure 2). L'intérêt de ce fonctionnement est de minimiser la puissance dissipée aux contacts 121A, 121B et l'usure selon un fonctionnement classique des roulements à billes. La butée axiale reprend la poussée axiale et sa vitesse évolue. L'effort de précharge exercé par le ressort 104 met en contact entre elles les deux demi-bagues extérieures 103A, 103B et libère les contacts dans les zones 122A, 122B (figure 2).

L'interstice 115 correspondant à cette phase transitoire est nul. A l'état de repos, l'interstice 115 doit donc être inférieur à une valeur maximale qui permet de libérer les contacts opposés dans les zones 122A, 122B. Cette valeur maximale correspond à la déflexion du roulement sous charge à laquelle s'ajoute l'écrasement de la demi-bague extérieure 103B sous précharge et doit également prendre en compte l'effort centrifuge.

Lorsque l'effort axial devient inférieur à l'effort seuil, une deuxième ligne 123 de contact entre les billes 101 et les bagues 102, 103 est créée par variation des angles de contact de la butée axiale.

Ainsi, lorsque, après une phase de démarrage et de fonctionnement transitoire, l'effort axial résiduel chute du fait de l'entrée en fonction d'un système d'équilibrage axial actif qui conduit à un déplacement axial de l'arbre 110 libérant à terme la liaison entre la butée axiale et le cône 108, l'arrêt en rotation de la bague intérieure 102 se produit par les frottements internes de la butée lorsque ses contacts passent progressivement des deux contacts 121A, 121B de la figure 2 à trois contacts avec l'adjonction d'un troisième contact 123B entre une bille 101 et la demi-bague extérieure 103B préchargée, puis à quatre contacts avec l'adjonction supplémentaire d'un quatrième contact 123A entre une bille 101 et la bague intérieure 102. Ceci se traduit par un arrêt doux de la bague intérieure 102.

Lors du fonctionnement de la butée axiale avec quatre zones de contact 121A, 121B, 123A, 123B (figure 3), le roulement n'est plus chargé et n'est plus entraîné en rotation, ce qui correspond à une phase de débrayage. Ce système maintient une parfaite position axiale du roulement.

Le jeu ou interstice 115 entre les demi-bagues extérieures 103A, 103B durant la phase de fonctionnement à quatre zones de contact présente une valeur supérieure à une valeur minimale qui permet le déplacement des demi-bagues extérieures 103A, 103B sous l'effet de la précharge 104 sans qu'il y ait contact entre ces deux demi-bagues.

## Revendications

1. Butée axiale débrayable pour machine tournante équipée de paliers fluides, comprenant une bague intérieure (102) pouvant être disposée autour d'un arbre tournant (110, 114) de façon non frettée radialement sur ledit arbre (110, 114), un cône de synchronisation (108) pouvant être monté sur l'arbre tournant (110, 114) pour assurer l'entraînement en rotation sélective de la bague intérieure (102), une bague extérieure (103) pouvant être montée sur un carter (111) à l'aide d'un système de suspension souple, des éléments de roulement (101) à contact oblique, un organe de butée fixe (113) et un système de précharge (104) souple, la bague extérieure (103) comprenant des première et deuxième demi-bagues extérieures (103A, 103B) pouvant être centrées sur le carter (111) par ledit système de suspension souple, les première et deuxième demi-bagues extérieures (103A, 103B) étant enserrées dans le sens axial entre d'une part l'organe de butée fixe (113) et d'autre part le système de précharge (104) souple, qui exerce un effort axial prédéterminé, la butée axial étant **caractérisée en ce que** l'effort axial exercé par le système de précharge souple est tel que, tant que la charge axiale exercée sur la butée axiale via le cône de synchronisation (108) est supérieure à un seuil donné, les éléments de roulement (101) présentent chacun une seule ligne (121) de deux points de contact (121A, 121B) avec d'une part la bague intérieure (102) et d'autre part la première demi-bague extérieure (103A) et la bague intérieure (102) est entraînée en rotation par ledit cône de synchronisation (108), tandis que, lorsque la charge axiale exercée sur la butée axiale devient plus faible, un interstice (115) est créé entre les première et deuxième demi-bagues extérieures (103A, 103B) et une deuxième ligne (123) de deux points de contact supplémentaires (123A, 123B) est créée entre chacun des éléments de roulement (101) d'une part et la bague intérieure (102) et la deuxième demi-bague extérieure (103B) d'autre part, de sorte que la butée axiale est débrayée, l'arrêt en rotation de la bague intérieure (102) s'effectuant par inertie et frottements internes à la butée par les quatre points de contact de chaque élément de roulement (101) avec la bague intérieure (102) et les première et deuxième demi-bagues extérieures (103A, 103B).

2. Butée axiale débrayable selon la revendication 1, **caractérisée en ce que** le système de précharge (104) comprend un ressort.

3. Butée axiale débrayable selon la revendication 1 ou la revendication 2, **caractérisée en ce que** le jeu entre les première et deuxième demi-bagues extérieures (103A, 103B) et le carter (111) est supérieur à 100 micromètres.

4. Butée axiale débrayable selon l'une quelconque des revendications 1 à 3, **caractérisée en ce que** les éléments de roulement (101) sont des billes.

5. Butée axiale débrayable selon l'une quelconque des revendications 1 à 4, **caractérisée en ce qu'**elle est appliquée à une machine tournante cryotechnique.

6. Butée axiale débrayable selon la revendication 5, **caractérisée en ce qu'**elle est appliquée à une machine tournante cryotechnique équipée d'un système d'équilibrage axial actif en régime stabilisé.

## Patentansprüche

1. Ausrückbarer Axialanschlag für eine Rotationsmaschine, die mit Fluidlagern versehen ist, umfassend einen Innenring (102), der um eine Rotationswelle (110, 114) nicht radial aufgeschrumpft auf diese Welle (110, 114) angeordnet sein kann, einen Synchronisationskegel (108), der auf der Rotationswelle (110, 114) montiert sein kann, um den selektiven Drehantrieb des Innenringes (102) zu gewährleisten, einen Außenring (103), der auf einem Gehäuse (111) mit Hilfe eines flexiblen Aufhängungssystems, von Rollelementen (101) mit schrägem Kontakt, eines festen Anschlagelements (113) und eines flexiblen Vorbelastungssystems (104) montiert sein kann, wobei der Außenring (103) erste und zweite äußere Halbringe (103A, 103B) umfasst, die auf dem Gehäuse (111) von dem flexiblen Aufhängungssystem zentriert werden können, wobei die ersten und zweiten äußeren Halbringe (103A, 103B) in Axialrichtung zwischen einerseits dem festen Anschlagelement (113) und andererseits dem flexiblen Vorbelastungssystem (104), das eine vorbestimmt axiale Kraft ausübt, eingespannt sind, wobei der Axialanschlag **dadurch gekennzeichnet ist, dass** die von dem flexiblen Vorbelastungssystem ausgeübte Kraft derart ist, dass solange die auf den Axialanschlag über den Synchronisationskegel (108) ausgeübte Kraft größer als eine gegebene Schwelle ist, die Rollelemente (101) jeweils eine einzige Linie (121) von zwei Kontaktpunkten (121A, 121B) mit einerseits dem Innenring (102) und andererseits dem ersten äußeren Halbring (103A) aufweisen, und der Innenring (102) in Drehung von dem Synchronisationskegel (108) angetrieben wird, während, wenn die auf den Axialanschlag ausgeübte Kraft geringer wird, ein Zwischenraum (115) zwischen den ersten und zweiten äußeren Halbringen (103A, 103B) geschaffen wird, und eine zweite Linie (123) von zwei zusätzlichen Kontaktpunkten (123A, 123B) zwischen jedem der Rollelemente (101) einerseits und dem Innenring (102) und dem zweiten äußeren Halbring (103B) andererseits geschaffen wird, so dass der Axialanschlag ausgerückt wird, wobei das Anhalten des Innenringes (102) in Drehung durch Trägheit und innere Reibungen im Anschlag durch die vier Kontaktpunkte jedes Rollelements (101) mit dem Innenring (102) und den ersten und zweiten äußeren Halbringen (103A, 103B) erfolgt.

2. Ausrückbarer Axialanschlag nach Anspruch 1, **dadurch gekennzeichnet, dass** das Vorbelastungssystem (104) eine Feder umfasst.

3. Ausrückbarer Axialanschlag nach Anspruch 1 oder 2, **dadurch gekennzeichnet, dass** das Spiel zwischen den ersten und zweiten äußeren Halbringen (103A, 103B) und dem Gehäuse (111) größer als 100 Mikrometer ist.

4. Ausrückbarer Axialanschlag nach einem der Ansprüche 1 bis 3, **dadurch gekennzeichnet, dass** die Rollelemente (101) Kugeln sind.

5. Ausrückbarer Axialanschlag nach einem der Ansprüche 1 bis 4, **dadurch gekennzeichnet, dass** er an einer kryotechnischen Rotationsmaschine angewandt wird.

6. Ausrückbarer Axialanschlag nach Anspruch 5, **dadurch gekennzeichnet, dass** er an einer kryotechnischen Rotationsmaschine angewandt wird, die mit einem aktiven axialen Ausgleichssystem im stabilisierten Modus versehen ist.

## Claims

1. A disengageable axial abutment for a rotary machine fitted with fluid bearings, the abutment comprising an inner ring (102) that can be arranged around a rotary shaft (110, 114) without radial interference on said shaft (110, 114), a synchronization cone (108) that can be mounted on the rotary shaft (110, 114) to provide selective rotary drive of the inner ring (102), an outer ring (103) that can be mounted in a casing (111) via a flexible suspension system, oblique-contact rolling elements (101), a static abutment member (113) and a flexible pre-loading system (104), the outer ring (103) comprising first and second outer half-rings (103A, 103B) that can be centered relative to the casing (111) by said flexible suspension system, the first and second outer half-rings (103A, 103B) being held in the axial direction between firstly the static abutment member (113) and secondly the flexible pre-loading system (104)which exerts a predetermined axial force, the axial abutment being **characterized in that** the axial force which is exerted by the flexible pre-loading system is such that so long as the axial load exerted on the axial abutment via the synchronization cone (108) is greater than a given threshold, each of the rolling elements (101) presents a single line (121) of two points of contact (121A, 121B) respectively with the inner ring (102) and with the first outer half-ring (103A), and the inner ring (102) is driven in rotation by said synchronization cone (108), whereas when the axial load exerted on the axial abutment becomes smaller, a gap (115) is created between the first and second outer half-rings (103A, 103B) and a second line (123) of two additional points of contact (123A, 123B) is created between each of the rolling elements (101) and respectively the inner ring (102) and the second outer half-ring (103B), such that the axial abutment is disengaged, with the inner ring (102) being stopped from rotating by inertia and by friction internal to the abutment via the four points of contact between each rolling element (101) and the inner ring (102) and the first and second outer half-rings (103A, 103B).

2. A releasable axial abutment according to claim 1, **characterized in that** the pre-loading system (104) comprises a spring.

3. A releasable axial abutment according to claim 1 or claim 2, **characterized in that** the clearance between the first and second outer half-rings (103A, 103B) and the casing (111) is greater than 100 micrometers.

4. A releasable axial abutment according to any one of claims 1 to 3, **characterized in that** the rolling elements (101) are balls.

5. A releasable axial abutment according to any one of claims 1 to 4, **characterized in that** it is applied to a cryogenic rotary machine.

6. A releasable axial abutment according to claim 5, **characterized in that** it is applied to a cryogenic rotary machine fitted with an active axial balancing system that is operative under steady conditions.
